# EUROPEAN PATENT APPLICATION

(11) **EP 4 613 518 A1**
(43) Date of publication of application: **10.09.2025**
(21) Application number: 25162171.0
(22) Date of filing: 06.03.2025
(51) Int. Cl.: B60H 1/00, B60K 1/04

(54) **SWAPPABLE BATTERY PACK FOR POWERING AND MOUNTING INSIDE A REFRIGERATION CONTAINER**

(30) Priority: 06.03.2024 PT 2024119305; 27.07.2024 PT 2024119616
(71) Applicant: Addvolt S.A., 4465-255 Sao Mamede de Infesta (PT)
(72) Inventor: SOUSA SILVA SOARES, JOSÉ RICARDO, 4465-255 SÃO MAMEDE DE INFESTA (PT); AZEVEDO COSTA, BRUNO FILIPE, 4465-255 SÃO MAMEDE DE INFESTA (PT); COSTA LUÍS CARDOSO ENCERRABODES, LUÍS FILIPE, 4465-255 SÃO MAMEDE DE INFESTA (PT); SOUSA MAGALHÃES, JOÃO PAULO, 4465-255 SÃO MAMEDE DE INFESTA (PT); LEITE FALCÃO CORREIA GONÇALVES, RICARDO ABÍLIO, 4465-255 SÃO MAMEDE DE INFESTA (PT)
(74) Representative: Patentree

(57) **Abstract**

The present disclosure relates to a swappable battery pack (1) for powering a refrigeration unit (16) of a refrigerated vehicle or cargo container (17), the swappable battery pack being configured for mounting inside the refrigerated container, comprising one or more batteries, and one or more mounting attachments (5, 7) arranged for attaching to the inside of the refrigerated container

## Description

### TECHNICAL FIELD

The disclosure relates to a swappable battery pack for powering a refrigeration unit for cooling the interior refrigerated vehicle or cargo container, i.e. a refrigerated shipping container or a container of refrigerated vehicle, and relates to a container comprising the swappable battery pack. The disclosure includes related software and methods for deploying and managing the swappable battery pack.

### BACKGROUND

Refrigeration units are essential for maintaining temperature-sensitive cargo during transportation. However, traditional refrigeration systems integrated into trailers or vehicles often lack flexibility and require significant downtime for maintenance or replacement. These systems typically require electrical power generators that use of a combustion engine. Refrigeration units may be powered electrically by batteries but in existing refrigerated containers or refrigerated vehicles there is no adequate space and mounting solutions for receiving batteries.

There is thus a need for a more efficient and adaptable solution that allows for quick deployment and management of electrical power delivery to refrigeration units of to ensure uninterrupted cooling of cargo.

These facts are disclosed in order to illustrate the technical problem addressed by the present disclosure.

### GENERAL DESCRIPTION

The present disclosure relates to a swappable battery pack for powering a refrigeration unit of a refrigerated vehicle or cargo container which offers a flexible and efficient solution for electrical power of refrigeration units of cooling containers or vehicles transporting temperature-sensitive cargo. With the disclosed swappable battery pack, preferably with temperature control software, remote management capabilities, and predictive algorithms, a refrigeration system can ensure optimal cooling performance, operational flexibility, and cargo preservation during transportation.

The present disclosure relates to a swappable battery pack for refrigeration units and respective container disclosed herein which address the aforementioned challenges by providing a modular and scalable solution for cooling trailers or vehicles. The system comprises a swappable battery pack that can be easily installed and replaced as needed, minimizing downtime, and maximizing operational efficiency. Additionally, the swappable battery pack may include a system comprising software for deploying and managing these units effectively, ensuring optimal cooling performance and temperature control for various cargo types.

The swappable battery pack of the present disclosure and respective management system are suitable for various industries requiring temperature-controlled transportation, including food and beverage, pharmaceuticals, and perishable goods. The disclosure can be deployed in trailers, trucks, vans, and other vehicles involved in the transportation of temperature-sensitive cargo.

The present disclosure to swappable battery pack enables quick deployment and replacement, allowing for seamless cooling of cargo without interrupting operations. Additionally, a swappable battery pack can be swapped out for charging and allowing for a fully charged battery pack to be swapped in, enabling quick deployment and replacement, allowing for seamless cooling of cargo without interrupting operations.

An aspect of the present disclosure relates to a swappable battery pack for powering a refrigeration unit of a refrigerated vehicle container or a refrigerated cargo container, and the swappable battery pack being for mounting inside said refrigerated container, the swappable battery pack comprising one or more batteries, and one or more mounting attachments for attaching to the inside of the refrigerated container.

In an embodiment for better results, the mounting attachments are releasable.

In an embodiment for better results, the one or more mounting attachments are one or more laterally retractable mounting attachments for wedge-mounting the swappable battery pack within the refrigerated container.

In an embodiment for better results, the one or more mounting attachments are one or more laterally retractable mounting attachments for coupling to an internal lashing point or internal stowage stopper of the refrigerated container.

In an embodiment for better results, the one or more mounting attachments are one or more laterally retractable mounting attachments for coupling between internal stopper protrusions of the refrigerated container.

In an embodiment for better results, the mounting attachments comprise one or more laterally retractable clamping-lock bars; the clamping-lock bars are preferably arranged vertically along the lateral sides of the swappable battery pack.

In an embodiment for better results, one or more retractable safety feet arranged to, when extended, stand the swappable battery pack, i.e. to maintain an upright position of swappable battery pack.

In an embodiment for better results, the one or more retractable safety feet each comprise, preferably at their end, a guiding wheel mounted to turn around a vertical axis.

In an embodiment for better results, the swappable battery pack may further comprise a frame for holding the one or more batteries, and for holding an electronic control circuit for managing the one or more batteries, in particular the frame being a cage for holding within said cage the one or more batteries, and the electronic control circuit, in particular the electronic control circuit comprising power electronics for managing refrigeration electric power delivered from the one or more batteries and for managing charging electric power delivered to the one or more batteries.

In an embodiment for better results, the one or more batteries are arranged vertically below the electronic control circuit.

In an embodiment for better results, the swappable battery pack may comprise a battery compartment containing the one or more batteries and an electronics compartment containing the electronic control circuit, in particular the battery compartment being arranged vertically below the electronics compartment.

In an embodiment for better results, the swappable battery pack may comprise a lifting fork positioner for receiving a lifting fork for lifting the swappable battery pack.

In an embodiment for better results, the swappable battery pack is integrally mounted with and within a framework of the refrigerated container.

In an embodiment for better results, the swappable battery pack is arranged to be mounted below a recess of the refrigerated container, where the recess is arranged to receive the refrigeration unit of the refrigerated container.

In an embodiment for better results, the swappable battery pack is laterally dimensioned to fit laterally within an internal width of a standard refrigerated container and vertically dimensioned to fit vertically within an internal height of said recess of a standard refrigerated container.

In an embodiment for better results, the swappable battery pack may comprise a thermal insulation division wall arranged to insulate the swappable battery pack from the refrigerated internal volume of the refrigerated container.

In an embodiment for better results, the thermal insulation division wall is arranged to insulate the swappable battery pack from the refrigerated internal volume of the refrigerated container when the swappable battery pack is mounted inside the refrigerated container.

In an embodiment for better results, the thermal insulation division wall is arranged on a frontal surface of the swappable battery pack and a back surface of the swappable battery pack is arranged to be mounted to a wall of the refrigerated container.

Another aspect of the present disclosure relates to a container comprising a swappable battery pack of the present disclosure.

In an embodiment for better results, the inside of the refrigerated container comprises anchoring attachments for receiving the one or more mounting attachments.

In an embodiment for better results, the container may comprise one or more longitudinal anchoring profiles for receiving the one or more mounting attachments.

In an embodiment for better results, the container may comprise a refrigeration unit for refrigerating the container.

In an embodiment for better results, the refrigeration unit is mounted externally, i.e. mounted to the outside, to the container, in particular mounted in a recess of the container.

In an embodiment for better results, the container is a reefer container, i.e. a refrigerated intermodal freight container, also called a refrigerated shipping container or refrigerated ISO Container.

In an embodiment for better results, the container is a reefer truck, i.e. a refrigerated vehicle container, i.e. a vehicle comprising an integrally mounted refrigerated container, also called a refrigerated vehicle.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

Where elements are described as being connected or connectable, they may be directly connected. Where elements are described as being coupled or coupleable, they may be linked by one or more intervening or interposing elements.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a frontal view of the swappable battery pack of the present disclosure.
**Figure 2****:** Schematic representations of an embodiment of a lateral view of the swappable battery pack of the present disclosure.
**Figure 3****:** Schematic representation of an embodiment of a top view of the swappable battery pack of the present disclosure.
**Figure 4****:** Schematic representation of an embodiment of a bottom view of the swappable battery pack of the present disclosure.
**Figure 5****:** Schematic representation of an embodiment of a frontal view of the swappable battery pack of the present disclosure.
**Figure 6****:** Schematic representation of an embodiment of a perspective view of the swappable battery pack of the present disclosure.
**Figure 7****:** Schematic representation of an embodiment of a lateral view of the swappable battery pack of the present disclosure.
**Figure 8****:** Schematic representation of an inside view of a refrigerated container and an embodiment of the swappable battery pack of the present disclosure.
**Figure 9****:** Schematic representation of a lateral view of a refrigerated container and an embodiment of the swappable battery pack of the present disclosure.
**Figure 10****:** Schematic representation of an external view of a refrigerated container and an embodiment of the swappable battery pack of the present disclosure.
**Figure 11****:** Schematic representation of a lower portion of an embodiment of the swappable battery pack of the present disclosure, including a bottom view (a), a side view (b) and a top view (c), where the retractable safety feet are retracted within the lower portion of the swappable battery pack.
**Figure 12****:** Schematic representation of a lower portion of an embodiment of the swappable battery pack of the present disclosure, including a side view where the retractable safety feet are extended.
**Figure 13****:** Schematic representation of a lower portion of an embodiment of the swappable battery pack of the present disclosure showing the offset supports of the clamping-lock bars.
**Figure 14****:** Schematic representation of an embodiment of a release mechanism for extension of the retractable safety feet.
**Figure 15****:** Schematic representation of a detail of an embodiment of the release mechanism for extension of the retractable safety feet.
**Figure 16****:** Schematic representation of a detail of fixation bolts of an embodiment of the swappable battery pack.
**Figure 17****:** Schematic representation of an embodiment with extendable supports of the clamping-lock bars.
**Figure 18****:** Schematic representation of a front and perspective views of cross-section of the refrigerated container and an embodiment of the swappable battery pack with clamps coupled to clamping rails of the container.

### DETAILED DESCRIPTION

The present disclosure relates to a swappable battery pack for powering a refrigeration unit of a refrigerated vehicle or cargo container which offers a flexible and efficient solution for electrical power of refrigeration units of cooling containers or vehicles transporting temperature-sensitive cargo. With the disclosed swappable battery pack, preferably with temperature control software, remote management capabilities, and predictive algorithms, a refrigeration system can ensure optimal cooling performance, operational flexibility, and cargo preservation during transportation.

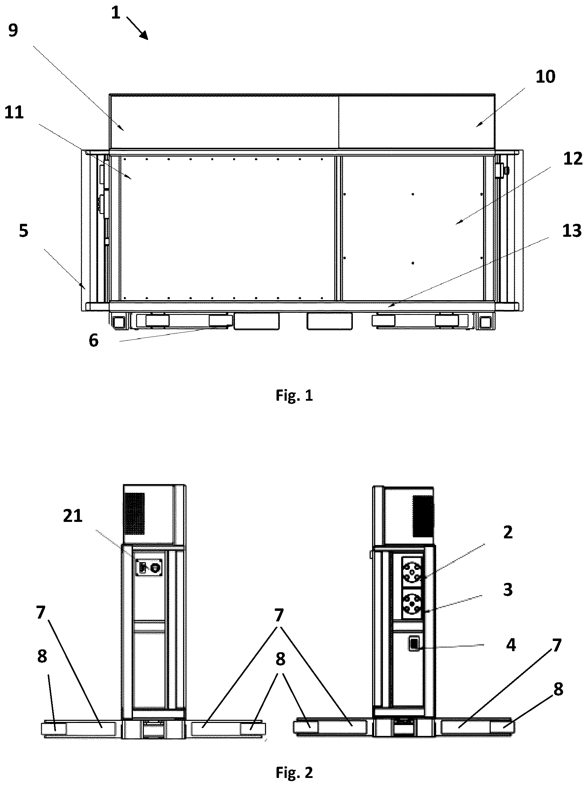

**Figure 1** shows a schematic representation of an embodiment of a view of the swappable battery pack of the present disclosure, where (1) represents the swappable battery pack, (5) represents a clamping-lock bar, (6) represents lifting fork positioners; (9) represents power electronics left compartment; (10) represents power electronics right compartment; (11) represents battery left compartment; (12) represents battery right compartment; (13) represents add swap cage.

**Figure 2** shows a schematic representation of an embodiment of a view of the swappable battery pack of the present disclosure, wherein (21) represents the service disconnect; (2) represents female power connector-reefer; (3) represents male power connector-charging; (4) represents signal connector; 7) represents retractable safety feet; and (8) represents guiding wheels.

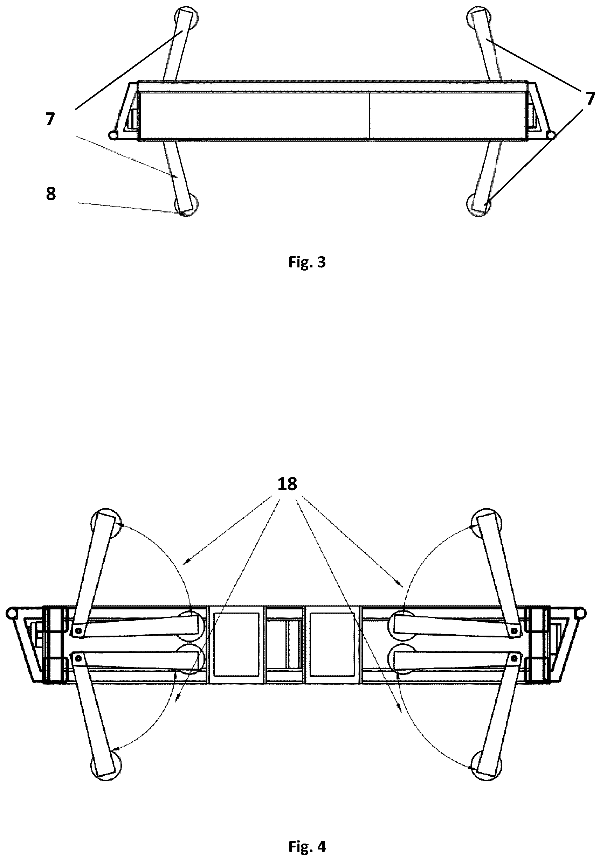

**Figure 3** shows a schematic representation of an embodiment of a view of the swappable battery pack of the present disclosure, wherein (7) represents retractable safety feet; (8) represents guiding wheel.

**Figure 4** shows a schematic representation of an embodiment of a view of the swappable battery pack of the present disclosure,wherein (18) represents rotation arcs of the retractable safety feet and respective guiding wheels.

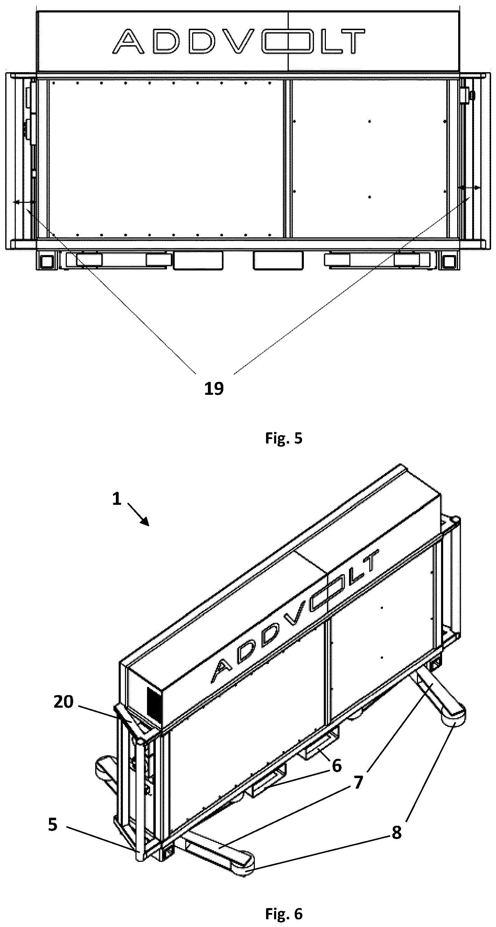

**Figure 5** shows a schematic representation of an embodiment of a view of the swappable battery pack of the present disclosure, where (19) represents retractable clamping-lock bars.

**Figure 6** shows a schematic representation of an embodiment of a view of the swappable battery pack of the present disclosure, where (20) represents an offset support of the clamping-lock bar.

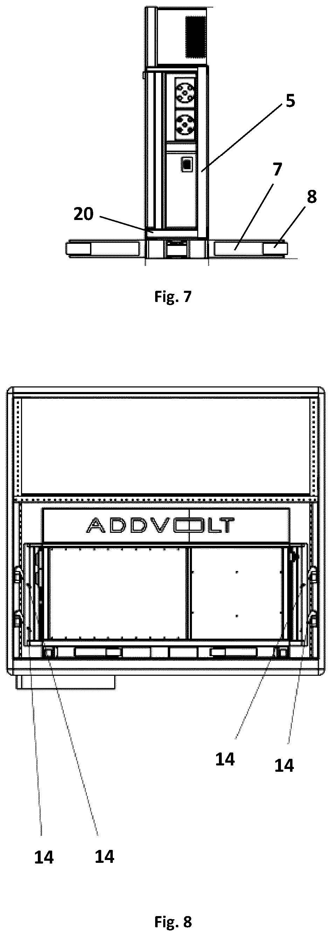

**Figure 7** shows a schematic representation of an embodiment of a view of the swappable battery pack of the present disclosure where the offset supports (20) allow for the unimpeded access of a lateral face of the swappable battery pack.

**Figure 8** shows a schematic representation of an embodiment of a view of the swappable battery pack of the present disclosure wherein (14) represents the clamp mechanism.

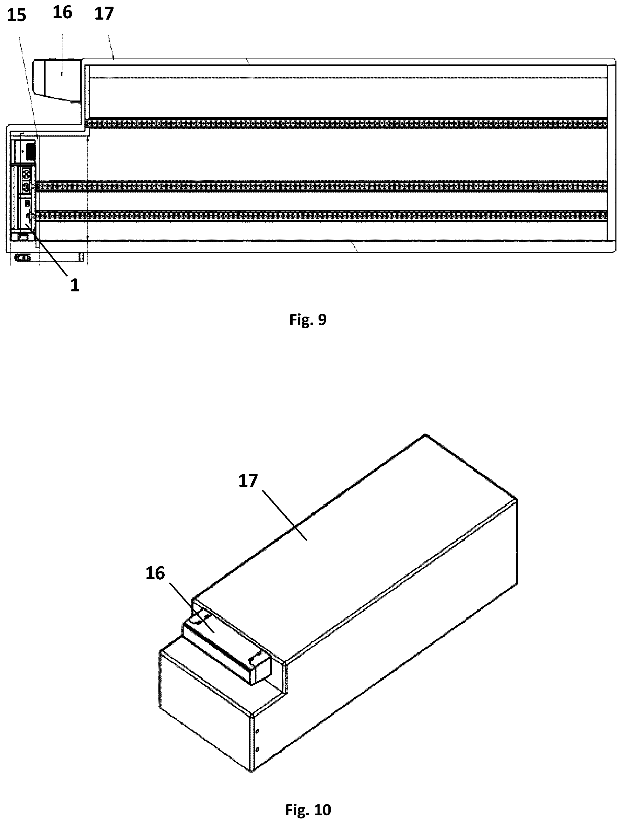

**Figure 9** shows a schematic representation of an embodiment of a view of the swappable battery pack of the present disclosure; wherein (15) represents the thermal insulation/division wall; wherein (16) represents reefer unit; wherein (17) represents the refrigerated container.

**Figure 10** shows a schematic representation of an embodiment of a view of the refrigerated container.

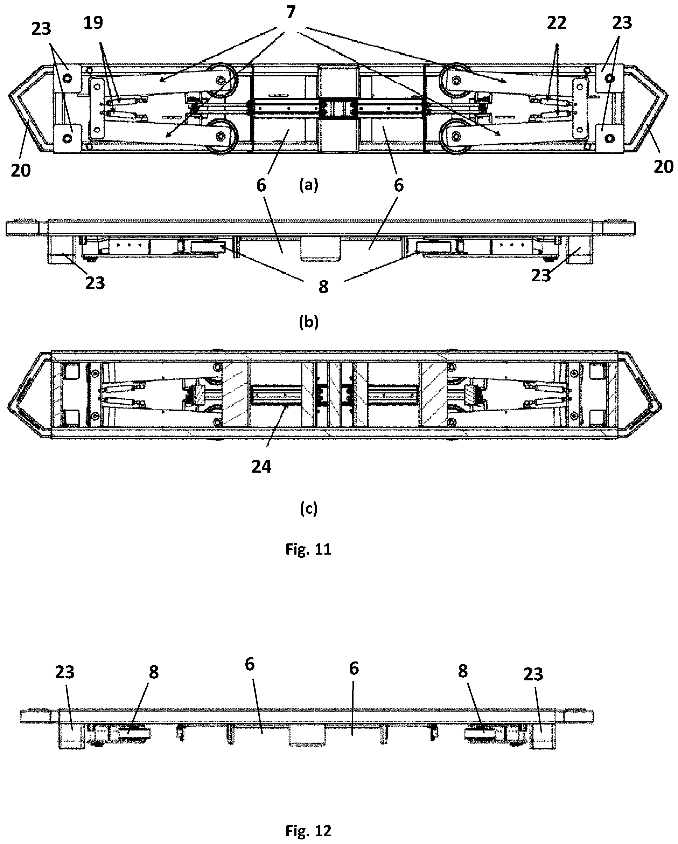

**Figure 11** shows a schematic representation of a lower portion of an embodiment of the swappable battery pack of the present disclosure, showing a release mechanism 24 for extension of the retractable safety feet, including a bottom view (a), a side view (b) and a top view (c), where the retractable safety feet are retracted within the lower portion of the swappable battery pack.

**Figure 12** shows a schematic representation of a lower portion of an embodiment of the swappable battery pack of the present disclosure, including a side view where the retractable safety feet and respective guiding wheels (8) are extended. Support feet (23) and the lifting fork positioners (6) are also shown.

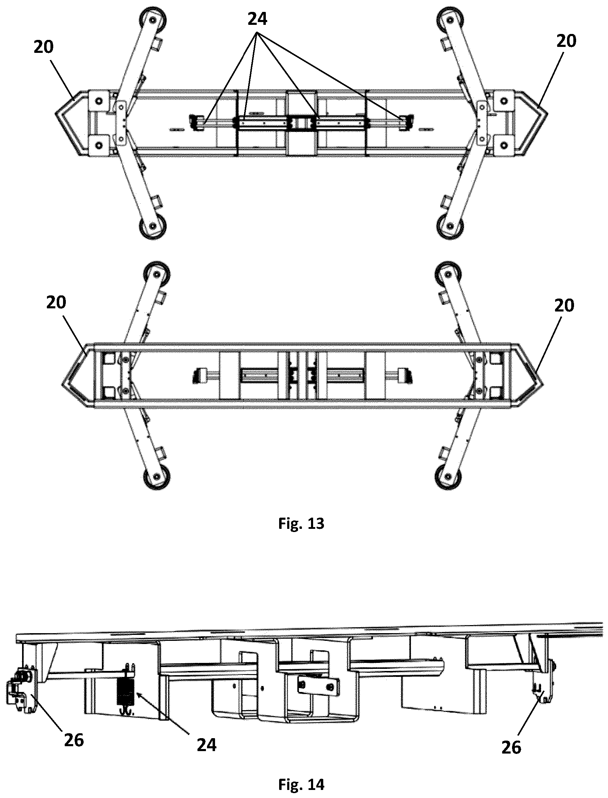

**Figure 13** shows a schematic representation of a lower portion of an embodiment of the swappable battery pack of the present disclosure also showing the offset supports (20) of the clamping-lock bars.

**Figure 14** shows a schematic representation of an embodiment of a release mechanism (24) for extension of the retractable safety feet and corresponding release plate (26) of the release mechanism.

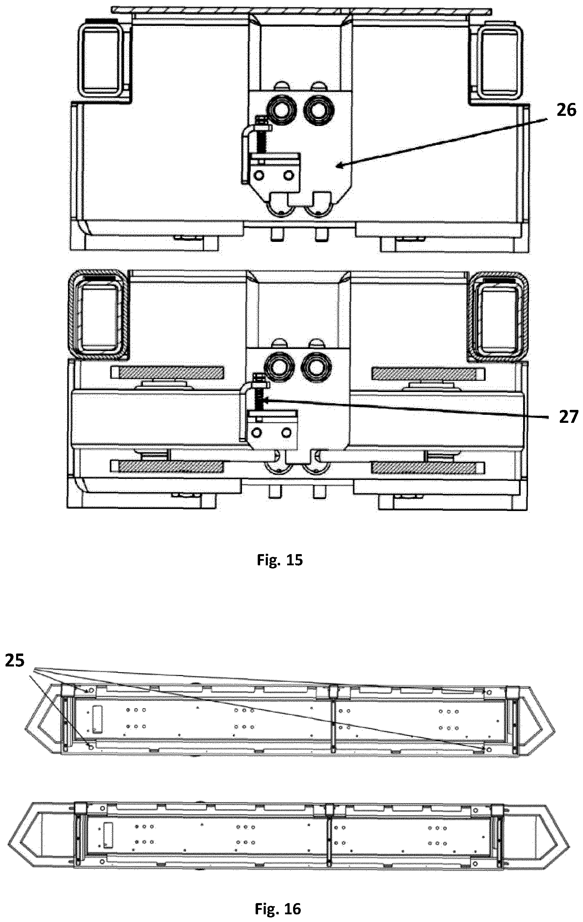

**Figure 15** shows a schematic representation of a detail of an embodiment of the release mechanism for extension of the retractable safety feet, further showing a spring (27) of the release mechanism.

**Figure 16** shows a schematic representation of a detail of fixation bolts of an embodiment of the swappable battery pack further showing fixing bolts (25).

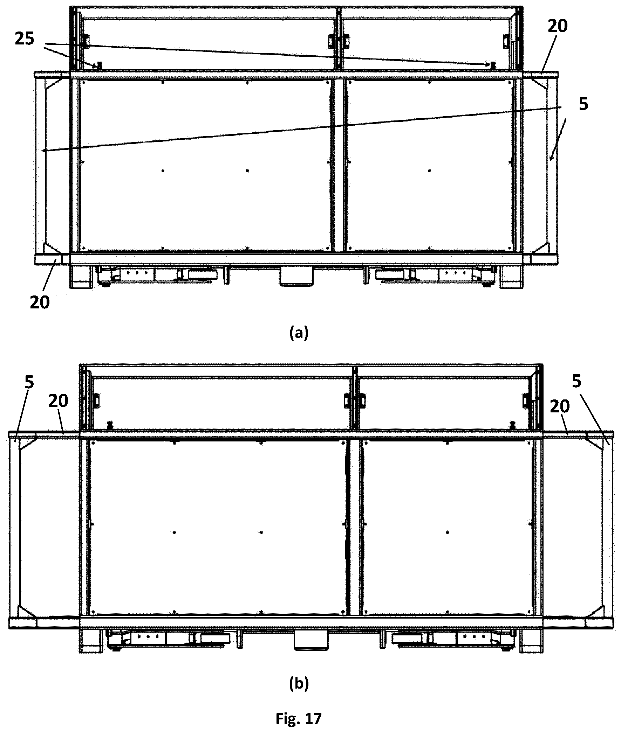

**Figure 17** shows a schematic representation of an embodiment with extendable supports of the clamping-lock bars.

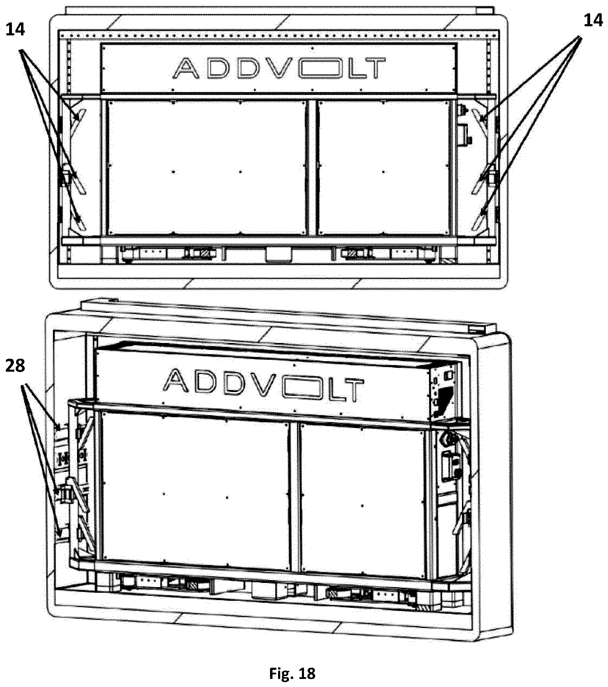

**Figure 18** shows a schematic representation of a front and perspective views of cross-section of the refrigerated container and an embodiment of the swappable battery pack with clamps (14) coupled to clamping rails (28) of the container.

Features present in the drawings include:
(1) represents a swappable battery pack for a refrigerated container;
(2) represents a female power reefer connector;
(3) represents a male power charging connector;
(4) represents signal connector;
(5) represents a clamping-lock bar;
(6) represents lifting fork positioners;
(7) represents retractable safety feet;
(8) represents a guiding wheel of a retractable safety foot.
(9) represents a power electronics left compartment;
(10) represents a power electronics right compartment;
(11) represents a battery left compartment;
(12) represents a battery right compartment;
(13) represents a swappable battery pack cage;
(14) represents a clamp;
(15) represents a thermal insulation/division wall;
(16) represents a reefer (refrigerating device);
(17) represents a container body;
(18) represents rotation arcs of the retractable safety feet;
(19) represents retractable clamping-lock bars;
(20) represents an offset support of the clamping-lock bar;
(21) represents a service disconnect input (e.g. a button)
(22) represents extension springs of the retractable safety feet;
(23) represents static feet of the swappable battery pack;
(24) represents a release mechanism for extension of the retractable safety feet;
(25) represents fixing bolts;
(26) represents release plate of the release mechanism;
(27) represents a spring of the release mechanism; and
(28) represents clamping rails of the refrigerated container.

The term "comprising" whenever used in this document is intended to indicate the presence of stated features, integers, steps, components, but not to preclude the presence or addition of one or more other features, integers, steps, components or groups thereof.

The foregoing description of the specific implementations will so fully reveal the general nature of the disclosure that others can, by applying knowledge within the skill of the relevant art(s), readily modify and/or adapt for various applications such specific implementations, without undue experimentation, without departing from the general concept of the present disclosure. Such adaptations and modifications are therefore intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s). It is to be understood that dimensions discussed or shown are drawings accordingly to one example and other dimensions can be used without departing from the disclosure.

Notably, the figures and examples above are not meant to limit the scope of the present disclosure to a single implementation, as other implementations are possible by way of interchange of some or all the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Swappable battery pack for powering a refrigeration unit of a refrigerated vehicle having a refrigerated container or a refrigerated cargo container, and for mounting inside said refrigerated container, comprising one or more batteries, and one or more mounting attachments arranged for attaching to the inside of the refrigerated container.

2. Swappable battery pack according to the previous claim wherein the mounting attachments are releasable.

3. Swappable battery pack according to any of the previous claims wherein the one or more mounting attachments are one or more laterally retractable mounting attachments, in particular comprising telescopically-extendable laterally-retractable one or more mounting attachments.

4. Swappable battery pack according to claim 3 wherein the one or more mounting attachments are one or more laterally retractable mounting attachments arranged for wedge-mounting the swappable battery pack within the refrigerated container.

5. Swappable battery pack according to claim 3 wherein the one or more mounting attachments are one or more laterally retractable mounting attachments for coupling to an internal lashing point or internal stowage stopper of the refrigerated container or for coupling to one or more longitudinal internal anchoring profiles of the refrigerated container, in particular wherein the one or more mounting attachments are one or more laterally retractable mounting attachments for coupling between internal stopper protrusions of the refrigerated container, in particular said internal stopper protrusions being comprised in one or more clamping rails of the refrigerated container.

6. Swappable battery pack according to any of the previous claims wherein the mounting attachments comprise one or more laterally retractable clamping-lock bars, in particular further comprising a telescopically-extendable support for each of the one or more laterally retractable clamping-lock bars.

7. Swappable battery pack according to any of the previous claims comprising one or more retractable safety feet arranged to, when extended, stand the swappable battery pack, in particular wherein the one or more retractable safety feet each comprise, preferably at their end, a guiding wheel mounted to turn around a vertical axis.

8. Swappable battery pack according to any of the previous claims comprising a frame for holding the one or more batteries, and for holding an electronic control circuit for managing the one or more batteries, in particular the frame being a cage for holding within said cage the one or more batteries, and the electronic control circuit, in particular the electronic control circuit comprising power electronics for managing refrigeration electric power delivered from the one or more batteries and for managing charging electric power delivered to the one or more batteries, optionally wherein the one or more batteries are arranged vertically below the electronic control circuit, optionally further comprising a battery compartment containing the one or more batteries and an electronics compartment containing the electronic control circuit, in particular the battery compartment being arranged vertically below the electronics compartment.

9. Swappable battery pack according to any of the previous claims comprising lifting fork positioners for receiving a lifting fork for lifting the swappable battery pack.

10. Swappable battery pack according to the previous claim and according to claim 7 comprising a mechanism for extending the retractable safety feet when a lifting fork engages with the lifting fork positioners, or comprising support feet and comprising a mechanism arranged for extending the retractable safety feet when a lifting fork engages with the lifting fork positioners and, subsequently, the support feet engaging with a floor by the weight of the swappable battery pack.

11. Swappable battery pack according to any of the previous claims wherein the swappable battery pack is integrally mounted with and within a framework of the refrigerated container, and/or wherein the swappable battery pack is arranged to be mounted below a recess of the refrigerated container, where the recess is arranged to receive the refrigeration unit of the refrigerated container, in particular wherein the swappable battery pack is laterally dimensioned to fit laterally within an internal width of a standard refrigerated container and vertically dimensioned to fit vertically within an internal height of said recess of a standard refrigerated container.

12. Swappable battery pack according to any of the previous claims comprising a thermal insulation division wall arranged to insulate the swappable battery pack from the refrigerated internal volume of the refrigerated container, in particular wherein the thermal insulation division wall is arranged to insulate the swappable battery pack from the refrigerated internal volume of the refrigerated container when the swappable battery pack is mounted inside the refrigerated container, more particularly wherein the thermal insulation division wall is arranged on a frontal surface of the swappable battery pack and a back surface of the swappable battery pack is arranged to be mounted to a wall of the refrigerated container.

13. Container comprising a swappable battery pack according to any of the previous claims, in particular wherein the inside of the refrigerated container comprises anchoring attachments for receiving the one or more mounting attachments, more particularly comprising one or more longitudinal anchoring profiles for receiving the one or more mounting attachments.

14. Container according to claim 13 comprising a refrigeration unit for refrigerating the container, preferably wherein the refrigeration unit is mounted externally to the container, in particular mounted in a recess of the container.

15. Container according to any of the claims 13 or 14 wherein the container is a reefer container or a reefer truck.
